# EUROPEAN PATENT SPECIFICATION

(11) **EP 0 840 064 B1**
(45) Date of publication and mention of the grant of the patent: **20.06.2001**
(21) Application number: 97830503.5
(22) Date of filing: 09.10.1997
(51) Int. Cl.: F24D 3/12, F24D 3/16

(54) **A system for the thermoregulation of a room with radiant panels**
Raumtemperierungsanlage mit Strahlungspanelen
Système pour la régulation de la température d'une enceinte avec des panneaux radiants

(30) Priority: 30.10.1996 IT PA960018
(43) Date of publication of application: 06.05.1998
(73) Proprietor: Bonura, Giuseppe, 90047 Partinico, Palermo (IT); Bonura, Marco, 90047 Partinico, Palermo (IT); Bonura, Vanessa, 90047 Partinico, Palermo (IT)
(72) Inventor: Bonura, Giuseppe, 90047 Partinico, Palermo (IT); Bonura, Marco, 90047 Partinico, Palermo (IT); Bonura, Vanessa, 90047 Partinico, Palermo (IT)

(56) References cited:
- CH-A- 509 554
- DE-U- 8 434 745
- US-A- 3 897 820
- US-A- 4 250 957

## Description

### TECHNICAL FIELD

The present invention relates to the field of the thermoregulation of a room by means of radiant panels.

### BACKGROUND OF THE INVENTION

Generally the conditioning of a room is carried out letting an air current into it with continuity and removing an equal quantity thereof. This is the principle of the conditioning by convection.

However, the comfort of the man in a roomderives, at least to a large measure, from the transfer of heat or energy by radiation. The heat transfer by radiation is caused by the giving up of heat of a warm surface to a colder surface. By regulating the trasnfer of radiant heat and the air temperature by convection, one can achieve an unsurpassable degree of comfort.

Thereby conditioning systems have been developed based on radiation instead of convection. Through radiation one can carry out both the heating and the cooling of a room. The radiation is carried out through radiant panels with electric conductors or pipes for air or water. By "radiant panels" panels are meant in the art that carry out a heat transfer at least for 50% under radiant form.

However the radiant panels presently known are floor or ceiling panels, and the percentage of heat transferred by radiation and not by convection is not high and in any case to operate efficiently they need for considerable temperature difference between the panels and the room, which involve considerable energy expenses.

CH509554A discloses a panel having a chamber for the passage of heat exchange water, realized by means of the assemblage of two plates, in at least one whereof corrugations are made to create ridges for confining U shaped channels for a water flow from an input to an output of the panel inside the chamher. The ridges present lowered height tracts providing openings for putting the channels in water communication to allow a flow of water from the input to the output in such a way as to entirely fill the chamber when passing from the input to the output.

US4250947A discloses a heating/cooling system including a panel assembly to be located within an interior of a building, and a liquid reservoir located within the ground. Each panel is substantially planar, it has an enlarged exterior surface area, and it has an inner chamber adapted to contain a liquid, for which it has an inlet and an outlet. It is suggested that the liquid inlet is located adjacent a bottom of the panel, and the liquid outlet is located adjacent a top of the panel, so that a liquid can be made to pass entirely through the panel from the inlet to the outlet therefor. It is suggested that the panels are connected together in a series arrangement, whereby an outlet of a panel is connected directly into the inlet of another panel. succeeding it.

### OBJECTS, CHARACTERISTICS AND ADVANTAGES OF THE INVENTION

It is the object of the present invention to provide a system for the thermoregulation of a room with radiant panels operating with a liquid that carries out an energy transfer by radiation to a proportion greater than those available at the present day, and that is energetically more efficient, particularly that can operate with small temperature differences between the thermovector liquid and the room to be thermoregulated, and having a faster response.

To transfer energy in the manner as much efficient as possible, it is provided that in the radiant panels the water or the liquid is in direct contact with an entire radiant surface, or an entire area thereof, of the panels, preventing the convective motions of air from lowering the temperature of the radiant surface itself.

It is, moreover, the object of the present invention to provide such a system, that is particularly advantageous under the point of view of the energy saving.

For feeding the liquid it is particularly provided the use of water of the undersoil. In fact, it turns out to be cool also when the external temperature is high, for a thermic inertia effect of the undersoil itself. In particular one can use a buried water cistern for the supply of water of a habitation, but eventually also a well, or also a purposedly realized cistern.

It is an important advantage of the present invention that for its efficiency it can be put in operation with alternative, ecologic energy sources, such as for instance alsosolar energy, by virtue of the fact that the operating temperature of the panels is much lower than conventional systems.

### SUMMARY OF THE INVENTION

Therefore, the subject of the present invention is a system for the thermoregulation of a room according to claim 1.

According to a preferred embodiment, it is provided that said radiant panels support a layer of insulating material on a wall thereof.

It is further provided that said radiant panels may be built from aluminum box elements.

It is also the subject of the present invention a system as set forth, further comprising a heat exchanger through which the thermovector liquid of said source and the thermovector liquid that passes in said radiant panels are put in a heat exchange relationship.

It is considered that said thermovector liquid source further comprises a tank buried in the undersoil.

### BRIEF DESCRIPTION OF THE DRAWINGS

The present invention will be best understood based on the following detailed disclosure of embodiments thereof, only given as a matter of example, absolutely not of restriction, with reference to the accompanying drawings, wherein:
- FIGURE 1 is a block diagram of a thermoregulation system according to the present invention;
- FIGURES 2A and 2B respectively represent a radiant panel according to the present invention, in front view, and the same assembled on a wall, in side view;
- FIGURE 3 is a block diagram of a thermoregulation system according to an improvement of the present invention, and
- FIGURE 4 is a graph which illustrates the incremental temperature variation of the water that passes in the radiant panels of a system according to the present invention against the incremental temperature variation of a room to be thermoregulated with it.

### DETAILED DISCLOSURE OF THE INVENTION

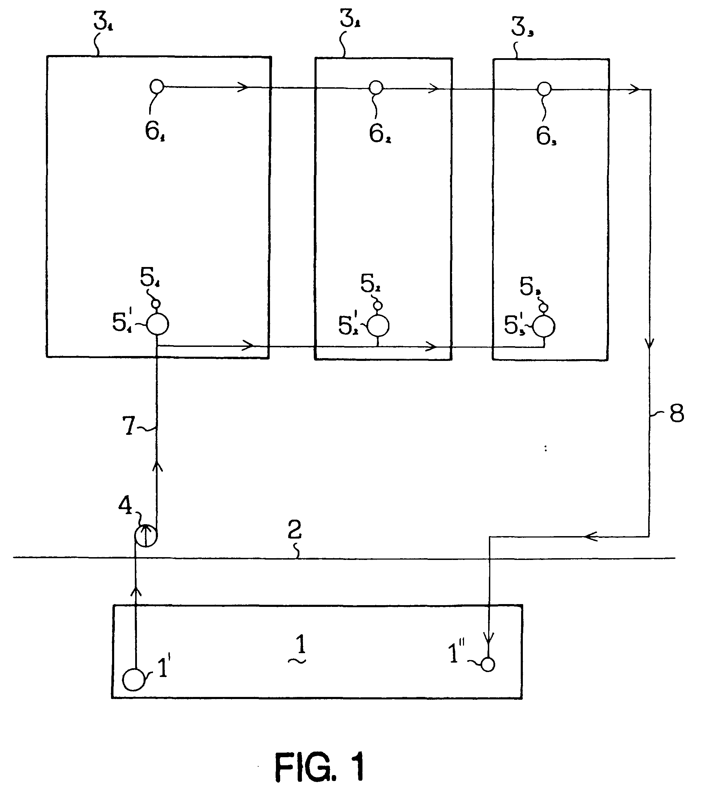

Referring to FIGURE 1, a system for the thermoregulation of a room according to the present invention comprises a buried water source **1**, which can be a cistern or tank arranged for instance at a depth of 20 centimeters from the ground level **2**, covered with a usual prefabricated floor. However, it could also be made up of any other tank arranged in the undersoil, basically intended for another use, as for instance a well. Moreover, the water could not be pure water, but a liquid made up of water added with suitable substances for the specific use. The thermoregulation system of the present invention, thereafter, comprises a set of radiant panels **3**_{**1**}**, 3**_{**2**}**, 3**_{**3**}. For the sake of simplicity three thereof are indicated, but they will be in the right number, as it will turn out based on any project of thermoregulation system which will use the teaching of the present invention. The radiant panels are intended to be assembled on walls. Water or, more gnerally, a liquid is drawn from tank **1** through a bottom valve **1'** and sent to a circuit for inletting water in the radiant panels **3**_{**1**}**, 3**_{**2**}**, 3**_{**3**} by a pump **4** through an input pipe **7**. The circuit for inletting comprises inputs **5**_{**1**}**, 5**_{**2**}**, 5**_{**3**} and throttle valves **5'**_{**1**}**, 5'**_{**2**}**, 5'**_{**3**} respectively for the three radiant panels **3**_{**1**}**, 3**_{**2**}**, 3**_{**3**}. The liquid passes in the radiant panels and goes out of them through an output circuit comprising outputs **6**_{**1**}**, 6**_{**2**}**, 6**_{**3**} respectively for the three radiant panels **3**_{**1**}**, 3**_{**2**}**, 3**_{**3**}**,** and through a discharge pipe **8** it returns into the buried tank 1 through a discharge valve **1"**.

The tank has been disclosed as a unique tank; however a set of more tanks in fluid communication between each other could be provided.

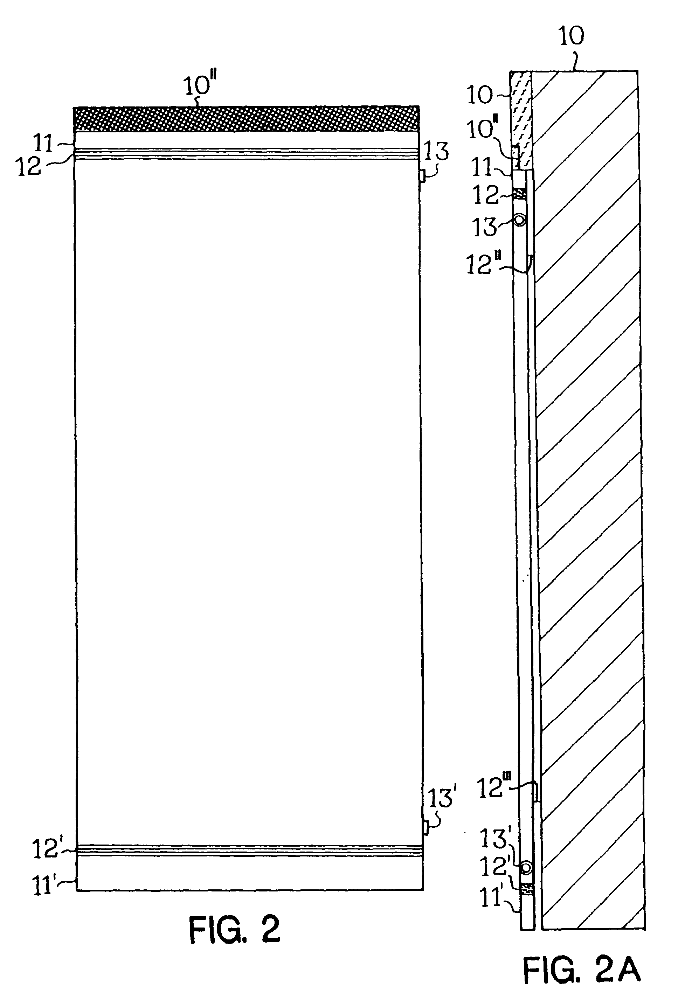

The constitution and the way of assembling of the radiant panels is illustrated with reference to FIGURES 2A and 2B. A radiant panel of the present invention comprises a rectangular plate upperly supporting a support band **11** for upperly supporting the plaster of a wall whereinto the radiant panel itself will be inserted, as illustrated in FIGURE 2B; on said support band a metal grid **10"** for the anchoring in the plaster itself is assembled, as can be seen in FIGURE 2B. Inferiorly the panel presents a band **11'** for the connection to a floor with a support for a floor socle. Two series of movable aeration flaps **12, 12'** are respectively arranged contiguously to the bands for supporting plaster **11** and for the floor connection **11'**. The panels comprises pipe quick fittings **13, 13',** respectively in an upper and a lower position, for the quick connection between panels. Wall hookings **12", 12"'** are finally provided respectively in an upper and a lower position. The panel presents two walls, the one turned to the wall or external wall **10** into which it is assembled, the other one turned to the room that is to be thermoregulated, said the radiant wall. A gap space is present between such walls. The above liquid, coming from the buried tank **1**, is made to circulate inside said gap space. The radiant panels are thermally insulated from the outer wall **10** through insulating elements to the end of avoiding heat losses.

The connection pipes arranged between the tank and the radiant panels are realized in an insulating material such as for instance polyvinylchloride and protected by thermoinsulating sheaths.

According to an execution, the radiant panels have a height of 2 m and a length of 1 m. The radiant panels can be realized for instance by means of welding of box elements or aluminum or stainless steel foils, commercially available, with interposition of bands of a width of 2 to 4 mm between the two foils. The box elements when are joined form with the internal profile itself thereof a gap space for a thermovector liquid. The welding so can be made through a rotary welder. So channels are achieved that create trajectories for the flow of the liquid. Between the outer wall and the radiant panel an insulating material, such as for instance polystyrene, is interposed, onto which a reflecting aluminum foil is fixed.

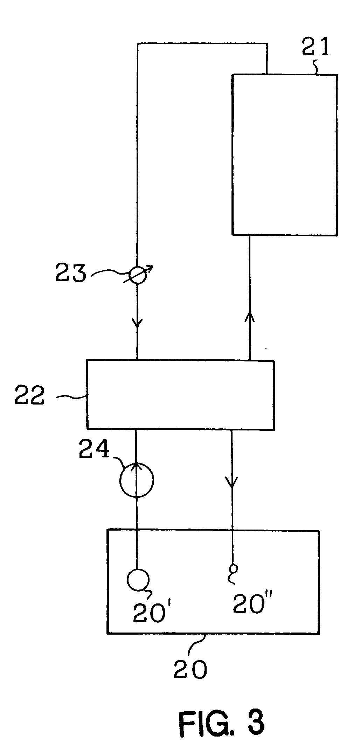

Referring to FIGURE 3, a considerable improvement is illustrated of a thermoregulation system according to the present invention. In it the interposition is provided of a heat exchanger **22** between the radiant panels **21** and the buried tank **20**. Water is drawn from the latter through a bottom valve **20'** and let by a pump **24** into the heat exchanger **22**. There the water comes into thermal exchange with thermal exchange liquid of the heat exchanger. Such a liquid comes into the radiant panels **21** wherefrom it returns to the heat exchanger **22** through an adjustable pump **23**. From the heat exchanger the water returns into the tank to the discharge **20" '**. With this contrivance one achieves the following two results. Firstly, it is possible to regulate in a continuous manner the temperature of the radiant panels with respect to the temperature of the undersoil, when necessary, by means of the simple regulation of the flow velocity of one of the two fluids, so as to avoid condensation phenomena on the radiant panels; moreover, in this way one can avoid the contact between the water in the tank and the liquid that passes in the radiant panels.

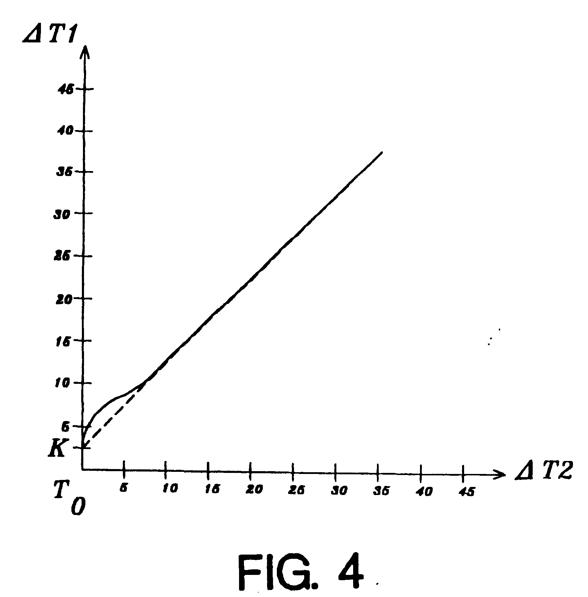

With reference to FIGURE 4, the course of the energy exchange between the radiant panels and the thermoregulated room is discussed. In an orthogonal Cartesian plane with the abscissae the incremental temperature variation of the thermoregulated room ΔT2 is represented and with the ordinates the incremental temperature variation of the liquid in the radiant panels ΔT1 is represented. The origin of the Cartesian diagram is at a point To which corresponds with the room temperature at the beginning of a thermoregulation experiment. An interdiction point K and a strong approximation to a linear course for a ΔT2 between 5 and 10 °C after a hump turning its convexity upside, are characteristic of the curve that represents the course. As mentioned, the curve does not start from zero, but from an interdiction point **K** which represents the minimum energy offset between the water in the radiant panels and the thermoregulated room, below which any energy exchange does not take place. Without willing to be tied to any particular theory, it is believed that this derives from the fact that the traversing of the metal plate and of the eventual covering paint involves an energy cost. This hypothesis appears to be confirmed by the fact that after a painting of the radiant panels the interdiction point **K** has shifted from 2 °C to 2,5 °C. It is evicted therefrom that the panel has a poor yield for temperature differences a little above the interdiction point, whilst the yield tends to 1 when the temperature difference grows.

A room having a surface of 50 m², a hight of 3 m was thermoregulated with a system of the present invention with panels sized as set forth above, a water tank of 12 m³ and a 0.5 HP pump. The thermoregulation results as in the following TABLE I were obtained:

**TABLE I**

| Month | External temperature | Internal temperature |
|---|---|---|
| July | Maximum 41.5 °C | Maximum 25.3 °C |
| | Minimum 26.0 °C | Minimum 24.8 °C |
| August | Maximum 39.5 °C | Maximum 25.6 °C |
| | Minimum 24.0 °C | Minimum 25.0 °C |
| September | Maximum 27.0 °C | Maximum 25,0 °C |
| | Minimum 21.0 °C | Minimum 24.5 °C |

As regards the radiant panels, a test carried out in September with a 20,000 calories boiler connected thereto has exhibited a thermal increment from 24.5 °C to 31.5 °C in about 8 min and with a considerable radiation effect on the body.

The data relevant to the internal temperature of the room clearly prove the efficiency of the system of the present invention.

The present invention has been disclosed and illustrated with reference to specific embodiments thereof, but it is to be expressely understood that variations, additions and/or omissions can be made, without so departing from the protection scope of the original teaching presented, as defined by the appended claims.

## Claims

1. A system for the thermoregulation of a room with radiant panels, comprising a source (1; 20) for feeding a thermal exchange or thermovector liquid; radiant panels (3₁, 3₂, 3₃) in which a thermovector liquid flows; means for inletting (1'; 4; 7; 5₁, 5'₁, 5₂, 5'₂, 5₃, 5'₃) and means for outputting (6₁, 6₂, 6₃; 8; 1") a thermovector liquid into/from said radiant panels, said radiant panels comprising a radiant wall for a thermal exchange with a room to be thermoregulated and, behind such a radiant wall, a gap space in which a thermovector liquid flows in direct contact with the entire radiant wall, and means (10", 12", 12" ') for the mounting onto a wall; a support band (11) for upperly supporting the "plaster of a wall (10) whereinto the radiant panel itself will be inserted, and a band (11') for the connection to a floor with a support for a floor socle; said means for inletting and said means for outputting said thermovector liquid into/from said radiant panels respectively including an inlet circuit comprising respective inputs (5₁, 5₂, 5₃) for each one of said radiant panels and an output circuit comprising respective outputs (6₁, 6₂, 6₃) for each one of said radiant panels (3₁, 3₂, 3₃), and channels creating trajectories for the passage of said thermovector liquid being arranged in said qap space of said radiant panels;
said panels comprising
pipe quick fittings (13, 13'), respectively in an upper and a lower position, for the quick connection between panels.

2. The system according to Claim 1, wherein said radiant panels support a layer of insulating material on a wall thereof.

3. The system according to Claim 1, wherein said radiant panels are built from aluminum box elements.

4. The system according to Claim 1, further comprising a heat exchanger (22) through which the thermovector liquid of said source and the thermovector liquid that flows in said radiant panels are put in a heat exchange relationship.

5. The system according to Claim 1, wherein said source for feeding a thermal exchange or thermovector liquid comprises a tank buried in the undersoil (1; 20).

## Revendications

1. Système pour la thermorégulation d'une enceinte avec des panneaux radiants, comprenant une source (**1, 20**) pour alimenter un liquide d'échange thermique ou thermovecteur; des panneaux radiants (**3**_{**1**}**, 3**_{**2**}**, 3**_{**3**}) dans lesquels passe un liquide thermovecteur; des moyens pour entrer (**1'; 4; 7; 5**_{**1**}**, 5'**_{**1**}**, 5**_{**2**}**, 5'**_{**2**}**, 5**_{**3**}**, 5'**_{**3**}) et des moyens pour sortir (**6**_{**1**}**, 6**_{**2**}**, 6**_{**3**}**; 8; 1"**) un liquide thermovecteur dans les/des dits panneaux radiants, les dits panneaux radiants en comprenant une paroi radiante pour un échange thermique avec une enceinte à thermorégler et, derrière cette paroi radiante, un interstice dans lequel passe un liquide thermovecteur en contact direct avec l'entière paroi radiante, et des moyens (**10", 12", 12"'**) pour leur montage sur une paroi; une bande de support (**11**) pour supporter supérieurement le plâtre d'une paroi (**10**) dans laquelle le panneau radiant luimême sera inséré, et une bande (**11'**) pour leur connexion à un plancher avec un support pour une plinthe à plancher; les dits moyens pour entrer et les dits moyens pour sortir le dit liquide thermovecteur dans les/des dits panneaux radiants en comprenant respectivement un circuit d'entrée comprenant des respectives entrées (**5**_{**1**}**, 5**_{**2**}**, 5**_{**3**}) pour chacun des dits panneaux radiants et un circuit de sortie comprenant des respectives sorties (**6**_{**1**}**, 6**_{**2**}**, 6**_{**3**}) pour chacun des dits panneau radiants (**3**_{**1**}**, 3**_{**2**}**, 3**_{**3**}), et des canaux créant des trajectoires pour le passage du dit liquide thermovecteur en étant ménagés dans le dit interstice des dits panneaux radiants;
les dits panneaux radiants en comprenant
des raccords rapides' pour tuyaux (**13, 13'**), respectivement en une position supérieure et inférieure, pour la connexion rapide entre les panneaux.

2. Le système selon la Revendication 1, dans lequel les dits panneaux radiants supportent une couche d'un matériel isolant sur une de leur parois.

3. Le système selon la Revendication 1, dans lequel les dits panneaux radiants sont construits à partir de profilés à boîte en aluminium.

4. Le système selon la Revendication 1, ultérieurement comprenant un échangeur thermique (**22**) par l'intermédiaire duquel le liquide thermovecteur de la dite source et le liquide thermovecteur lequel passe dans les dits panneaux radiants sont mis en relation d'échange thermique.

5. Le système selon la Revendication 1, dans lequel la dite source pour alimenter un liquide d'échange thermique ou thermovecteur comprend un réservoir enterré dans le sous-sol.

## Patentansprüche

1. Raumtemperierungsanlage mit Strahlungspanelen, die eine Quelle (**1; 20**) um eine Flüssigkeit für den Wärmeaustausch oder die Wärmeträgerung zu speisen; Strahlungspanelen (**3**_{**1**}**, 3**_{**2**}**, 3**_{**3**}) worin ein flüssiger Wärmeträger fliesst; Mittel (**1'; 4; 7; 5**_{**1**}**, 5'**_{**1**}**, 5**_{**2**}**, 5'**_{**2**}**, 5**_{**3**}**, 5'**_{**3**}) um einen flüssigen Wärmeträger in die genannten Strahlungspanelen einfliessen zu lassen, und Mittel (**6**_{**1**}**, 6**_{**2**}**, 6**_{**3**}**; 8; 1"**) um einen Wärmeträger aus den genannten Strahlungspanelen ausfliessen zu iaasen, worin die genannten Strahlungspanelen eine strahlende Wand um einen termischen Austausch mit einem Raum zu temperaturregulieren zu durchsetzen und, hinter der genannten strahlenden Wand, einen leeren Raum wo ein flüssiger Wärmeträger in unmittelbarem Kontakt mit der ganzen strahlenden Wand fliesst, und Mittel (**10", 12", 12'''**) um die Aulstellung an der Wand zu durchsetzen enthalten; ein Unterstutzüngsband (**11**) um den Putz der Wand (**10**) worin; das genannte strahlungspanel eingesetzt ist zu abstützen, und ein Verbindungsband (**11'**) um die Verbindung mit dem Fussboden durch eine Unterstützung für den Fussbodensockel enthalten; wo die genannten Mittel um den genannten flüssigen Wärmeträger in die genannten Strahlungspanelen einfliessen und aus den genannten Strahlungspanelen ausfliessen zu lassen einen Eingangskreislauf der die respektive Eingangangsflüssigkeite (**5**_{**1**}**, 5**_{**2**}**, 5**_{**3**}) für jedes Strahlungspanel einschliesst und einen Ausgangskreislauf der die respektive Ausgangsflüssigkeite (**6**_{**1**}**, 6**_{**2**}**, 6**_{**3**}) für jedes Strahlungspanel (**3**_{**1**}**, 3**_{**2**}**, 3**_{**3**}) einschliesst respektiv enthalten und worin einige Kanale die die Bahne um den genannten flüssigen Wärmeträger fliessen zu lassen machen in dem genannten leeren Raum der Strahlungspanelen festgesetzt sind;
worin die genannten Panele
Rohrschnellkupplungen (**13, 13'**) respektiv in einer Ober- oder unterstellung um die genannten Panele schnell zu verbinden enthalten.

2. Die Raumtemperierungsanlage gemäss dem Anspruch 1, worin die genannten Strahlungspanele eine Schicht von Isolationsmaterial an der respektiven Wand unterstützen.

3. Die Raumtemperierungsanlage gemäss dem Anspruch 1, worin die genannten Strahlungspanele aus kastenförmigen Aluminiumelementen gebaut sind.

4. Die Raumtemperierungsanlage gemäss dem Anspruch 1, das weiter einen Wärmeaustauscher **(22)** mittels des der flüssige Wärmeträger aus der genannten Quelle und der flüssige Wärmeträger der in den genannten Strahlungspanelen fliesst in Wärmeaustauschverhältnis gesetzt sind.

5. Die Raumtemperierungsanlage gemäss dem Anspruch 1, worin die genannte Quelle um einen flüssigen Wärmeträger oder Wärmeaustauscher zu speisen eine Zisterne in dem Untergrund (**1; 20**) verlegt enthalt.
